# EUROPÄISCHE PATENTSCHRIFT

(11) **EP 0 762 627 B1**
(45) Veröffentlichungstag und Bekanntmachung des Hinweises auf die Patenterteilung: **28.03.2001**
(21) Anmeldenummer: 96810528.8
(22) Anmeldetag: 09.08.1996
(51) Int. Cl.: H02P 7/62, B60L 3/00

(54) **Verfahren zur Regelung einer Drehfeldmaschine**
AC machine control device
Procédé de commande d'une machine à courant alternatif

(30) Priorität: 11.09.1995 DE 19533570
(43) Veröffentlichungstag der Anmeldung: 12.03.1997
(73) Patentinhaber: DaimlerChrysler AG, 70567 Stuttgart (DE)
(72) Erfinder: Buschmann, Michael, 5300 Turgi (CH)

(56) Entgegenhaltungen:
- DE-A- 3 115 538
- US-A- 5 204 607
- PATENT ABSTRACTS OF JAPAN vol. 014, no. 140 (M-0950), 16.März 1990 & JP-A-02 007801 (TOSHIBA CORP), 11.Januar 1990,
- PATENT ABSTRACTS OF JAPAN vol. 13, no. 103 (E-725), 10.März 1989 & JP-A-63 274397 (FUJI ELECTRIC CO LTD), 11.November 1988,

## Beschreibung

### TECHNISCHES GEBIET

Bei der Erfindung wird ausgegangen von einem Verfahren zur Regelung einer Drehfeldmaschine nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus einer Veröffentlichung von H. P. Bauer und M. Buschmann, CONTROL SYSTEM FOR A THREE PHASE GTO INVERTER FOR MASS TRANSIT APPLICATIONS, EPE-Proceedings, Firenze (1991) Heft 4, S. 638 - 643, bekannt ist. Dort werden Drehfeldmaschinen einer Untergrundbahn mit direkter Selbstregelung betrieben und aus einem Gleichspannungsnetz über Wechselrichter gespeist. Dabei wird zwar eine Spannungsabsenkung im Gleichspannungsnetz ausgeregelt, aber auf die Problematik einer schnellen Spannungswiederkehr nicht eingegangen.

Durch K. Schiftner: "Antriebssysteme für die Traktion" in der ELIN-Zeitschrift 1990, Heft 1/2, S. 21 - 26, ist ein Antriebssytem für Bahnfahrzeuge mit Asynchronmotoren und einem Spannungszwischenkreis-Umrichter bekannt. Dort wird bei Netzspannungsausfällen, z. B. beim Überfahren von Trennstellen, die Zwischenkreisspannung durch die Umwandlung von kinetischer Energie der Motoren und des Fahrzeugs in elektrische Energie gestützt.

Durch A. Trenner u. a.: "Überbrückung von Netzspannungseinbrüchen oder kurzen Netzausfällen bei Asynchronmaschinen-Antrieben mit Spannungszwischenkreisumrichtern" in der ELIN-Zeitschrift 1990, Heft 1/2, S. 27 - 30, ist ein Verfahren zum Stützen der Zwischenkreisspannung bekannt, bei welchem bei Neztspannungseinbrüchen ein Nullspannungsvektor geschaltet wird. Dabei wird die Asynchronmaschine entregt und muß später wieder aufmagnetisiert werden, wodurch deren Antrieb für einige Zeit nicht zur Verfügung steht.

Durch K. Pölzler: "Antriebssystem "Standard Dynamik" für Drehstromasynchronmaschinen" in der ELIN-Zeitschrift 1990, Heft 1/2, S. 21 - 26, ist es bekannt, nach Wiederkehr der Speisespannung mit einer Fangprozedur die Zuschaltung der Drehstromasynchronmaschine allmählich und nicht plötzlich vorzunehmen, so daß ein Außertrittfallen vermieden wird.

Zum einschlägigen Stand der Technik wird zusätzlich auf die Dissertation an der Ruhr-Universität Bochum, 1988, von J. Hodapp, "Die direkte Selbst-Regelung einer Asynchronmaschine mit einem Signalprozessor", veröffentlicht in: Fortschrittberichte VDI, Reihe 8, Nr. 175: Meß-, Steuerungs-und Regelungstechnik, VDI-Verlag Düsseldorf, 1989, S. 3 - 47, hingewiesen, in der Berechnungen von magnetischem Ständerfluß und Drehmomentistwert einer Drehfeldmaschine angegeben sind, die auch bei der vorliegenden Erfindung verwendet werden können.

Bei der Anwendung schneller, dynamischer Regelverfahren und bei einer ungünstigen Systemauslegung einer Maschine kann es vorkommen, daß bei schnellen Anstiegen der Speisespannung, wie sie z. B. bei Lastsprüngen oder bei Bügelsprüngen in Traktionsanwendungen vorkommen können, der Ständerflußanstieg der Maschine schneller sein kann als deren Rotorzeitkonstante. Je nach Dauer des Flußanstiegs kann eine Momentenüberhöhung oder sogar ein "Kippen" der Maschine die Folge sein.

Typischerweise treten diese Probleme nur im Feldschwächbereich auf, in dem die Stellreserve gering ist.

Desweiteren wird in der DE 31 15 538 A1 eine Steuerungseinrichtung für eine Induktionsmaschine angegeben. Darin wird eine Änderung des internen magnetischen Flusses oder der induzierten Spannung, die durch eine Beeinflussung von Sekundärstrom und Magnetisierungsstrom hervorgerufen wird, überwacht und die Frequenz des Primärstromes so geregelt, dass die Änderung des internen Flusses weitgehend unterdrückt wird. Dazu wird aus dem magnetischen Fluss ein differentieller Wert abgeleitet und zu dem Befehl für die Steuerfrequenz addiert. Das in der DE 31 15 538 A1 beschriebene Verfahren zielt jedoch ausschliesslich darauf ab, die durch die Beeinflussung des Sekundärstromes und des Magnetisierungsstromes hervorgerufenen Änderungen im magnetischen Fluss mittels eines regelungsmässigen Frequenzeingriffes in den Primärstrom zu unterdrücken zu versuchen. Das in der DE 31 15 538 A1 angegebene Verfahren ist somit ungeeignet für eine durch eine Speisegleichspannungsänderung hervorgerufene Flussänderung, da je nach Betriebszustand der Maschine (Motorbetrieb oder Generatorbetrieb) entweder eine Frequenzerhöhung des Primärstromes oder eine Frequenzerniedrigung des Primärstromes stattfindet und somit nur auf Änderungen der Lastseite reagiert werden kann. Eine Vermeidung des Kippens der Maschine aufgrund einer Speisegleichspannungsänderung ist mit dem in der DE 31 15 538 A1 beschriebenen Verfahren nicht möglich.

### DARSTELLUNG DER ERFINDUNG

Die Erfindung, wie sie im Patentanspruch 1 definiert ist, löst die Aufgabe; ein Verfahren zur Regelung einer Drehfeldmaschine der eingangs genannten Art derart weiterzuentwickeln, daß ein Kippen der Drehfeldmaschine infolge von Schwankungen der Speisespannung, insbesondere bei deren Anstieg, vermieden wird.

Vorteilhafte Ausgestaltungen der Erfindung sind in den abhängigen Patentansprüchen definiert.

Ein Vorteil der Erfindung besteht darin, daß weniger Betriebsstörungen auftreten, insbesondere im Feldschwächbetrieb einer Drehfeldmaschine.

Das erfindungsgemäße Verfahren läßt sich leicht auf vorhandene Regelungen übertragen, da sowohl der zu überwachende Anstieg des magnetischen Flusses, die Filterzeitkonstante der Spannungsfilterung und auch die zulässige Abweichung der Speisespannung leicht zu erfassen sind. Diese Überwachungen und Erfassungen können parallel zur normalen Regelung durchgeführt werden. Der Regler bleibt auch im Fehlerfall/Problemfall aktiv; er wird nur kurzzeitig durch Nullspannungsimpulse "überstimmt". Es ergeben sich dadurch jedoch fließende Übergänge vom Normalbetrieb zum Störungsfall und umgekehrt, wobei in jedem Fall der Antrieb aktiv bleibt.

### KURZE BESCHREIBUNG DER ZEICHNUNGEN

Die Erfindung wird nachstehend anhand von Ausführungsbeispielen erläutert. Es zeigen:
- Fig. 1: ein Prinzipschaltbild einer Drehmomentregelschaltung einer Drehfeldmaschine,
- Fig. 2 und 4: zeitliche Verläufe einer Speisegleichspannung für die Drehfeldmaschine und
- Fig. 3 und 5: zeitliche Verläufe von Ständerstrom und Drehmoment der Drehfeldmaschine.

### WEGE ZUR AUSFÜHRUNG DER ERFINDUNG

In den Figuren sind gleiche Teile mit gleichen Bezugszeichen gekennzeichnet.

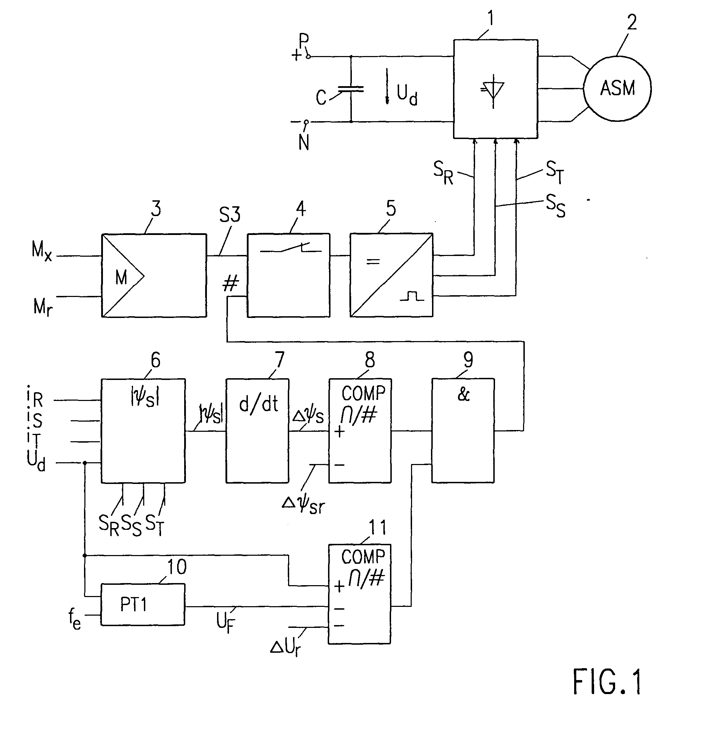

Fig. 1 zeigt eine Induktions- bzw. Asynchron- bzw. Drehfeldmaschine (2), die über einen 3phasigen Wechselrichter (1) aus einer Gleichspannungsquelle mit einem Pluspol (P) und einem Minuspol (N) mit einer Speisegleichspannung (U_{d}) gespeist wird. Ein Kondensator (C) dient zur Stabilisierung dieser Speisegleichspannung (U_{d}). Die Speisegleichspannung (U_{d}) kann z. B. die Zwischenkreisgleichspannung eines nicht dargestellten Umrichters mit einem Gleichspannungszwischenkreis sein. Der Gleichspannungszwischenkreis bildet dann zusammen mit dem Wechselrichter (1) und der Drehfeldmaschine (2) die Regelstrecke und der Wechselrichter (1) das Stellglied der Regelstrecke. Zur Regelung eignen sich schnelle und dynamische Regelverfahren, die auf Mikroprozessoren realisiert werden, z. B. das Verfahren der direkten Selbstregelung.

Ein Drehmomentregler (3), dem eingangsseitig ein Drehmomentistwert (Mₓ) und ein z. B. von einer nicht dargestellten, übergeordneten Regelung vorgebbarer Drehmomentsollwert (Mᵣ) zugeführt sind, liefert ausgangsseitig eine Reglerstellgröße (S3) über einen Öffner (4) an einen Zündimpulswandler (5). Dieser liefert ausgangsseitig Wechselrichtersteuersignale (S_{R}, S_{S}, S_{T}) für 3 Wechselstromphasen (R, S, T) an den Wechselrichter (1).

Ein Funktionsgeber (6) erhält eingangsseitig diese Wechselrichtersteuersignale (S_{R}, S_{S}, S_{T}), ein zur Speisegleichspannung (U_{d}) proportionales Signal sowie Phasenstromistwertsignale (i_{R}, i_{S}, i_{T}) vom Ausgang des Wechselrichters (1) und liefert ausgangsseitig ein zum Betrag des magnetischen Ständerflusses (ψₛ) proportionales Signal an ein Differenzierglied (7). Es ist ausreichend, wenn anstelle von 3 Phasenstromistwerten (i_{R}, i_{S}, i_{T}) nur 2 vorgegeben werden und der 3. über die Stromsumme berechnet wird. Die Berechnung des magnetischen Ständerflusses (ψₛ) kann z. B. gemäß den Berechnungen der eingangs genannten Dissertation erfolgen. Das Differenzierglied (7) liefert ausgangsseitig ein zur magnetischen Flußänderung (Δψₛ) proportionales Signal an einen nichtnegierenden Eingang eines 1. Komparators (8), an dessen negierendem Eingang ein vorgebbarer Grenzwert der magnetischen Flußänderung (Δψₛᵣ) anliegt und der ausgangsseitig über ein UND-Glied (9) mit einem Steuereingang des Öffners (4) in Steuerverbindung steht. Ist das Ausgangssignal des UND-Gliedes (9) gleich 0, so ist der Öffner (4) geschlossen, andernfalls während einer vorgebbaren Zeitdauer im Bereich von 150 µs - 500 ms geöffnet. Der Grenzwert der magnetischen Flußänderung (Δψₛᵣ) entspricht der Zeitkonstante des Rotors der Drehfeldmaschine (2); er ist so gewählt, daß die Drehfeldmaschine (2) "kippen" würde, wenn die magnetische Flußänderung (Δψₛ) diesen Grenzwert überschreiten würde. Die Rotorzeitkonstante ergibt sich aus dem Verhältnis von Streuinduktivität zu Rotorwiderstand der Drehfeldmaschine (2); sie bestimmt die mögliche Flußanstiegsgeschwindigkeit.

Wird der Anstieg des magnetischen Ständerflusses (ψₛ) schneller als die Rotorzeitkonstante, so würde bei längerer Aussteuerung der Rotorfluß dem magnetischen Ständerfluß (ψₛ) nicht mehr folgen können und somit die Drehfeldmaschine (2) "kippen". Aus diesem Grund muß der Anstieg des magnetischen Ständerflusses (ψₛ) überwacht werden. Ein 1. Schutzmaßnahmekriterium für einen unzulässigen Spannungsanstieg ist erfüllt, wenn der magnetische Ständerflußanstieg (Δψₛ) schneller ist als der Rotorflußanstieg, der maximal nur mit der Rotorzeitkonstante erfolgen kann. Der Ständerflußanstieg (Δψₛ) wird daher im Komparator (8) mit dem maximal zulässigen Rotorflußanstieg (Δψₛᵣ) verglichen.

Einem PT1-Filter bzw. Tiefpaßfilter (10) sind eingangsseitig das zur Speisegleichspannung (U_{d}) proportionale Signal und eine vorgebbare Eck- oder Grenzfrequenz (fₑ) in einem Frequenzbereich von 5 Hz ... 20 Hz zugeführt; ausgangsseitig liefert es ein gefiltertes Spannungssignal (U_{F}) an einen negierenden Eingang eines 2. Komparators (11), der ausgangsseitig mit einem 2. Eingang des UND-Gliedes (9) verbunden ist. Die Grenzfrequenz (fₑ) ist so gewählt, daß in der Speisegleichspannung (U_{d}) enthaltene Oberschwingungen das Tiefpaßfilter (10) nicht passieren können. Einem nichtnegierenden Eingang des Komparators (11) ist das zur Speisegleichspannung (U_{d}) proportionale Signal zugeführt und einem weiteren negierenden Eingang ein vorgebbarer Spannungsdifferenzgrenzwert (ΔUᵣ) .

Dadurch ist ein 2. Schutzmaßnahmekriterium definiert. Ist diese gefiltere Spannung (U_{F}) um eine projektabhängig einstellbare Schwelle (ΔUᵣ) kleiner als die ungefilterte Speisegleichspannung (U_{d}), dann ergibt sich in Verbindung mit dem 1. Schutzmaßnahmekriterium bereits ein eindeutiger Nachweis eines unzulässig steilen Spannungsanstiegs ΔU = U_{d} - U_{F}.

Um ein Kippen der Drehfeldmaschine (2) oder Überströme zu vermeiden, könnte nur die Leistung des Antriebs reduziert werden, bis wieder stabile Verhältnisse vorhanden sind. Dies hätte jedoch den Nachteil, daß dann z. B. bei Traktionsfahrzeugen die elektrische Bremse nicht sofort zur Verfügung steht. Eine Lösung dieses Problems besteht darin, daß die Ständerflußaufbaugeschwindigkeit (Δψₛ) so verkleinert wird, daß der Rotorfluß folgen kann und die Drehfeldmaschine (2) nicht kippt. Ferner muß der Drehmomentistwert (Mₓ) unter Kontrolle gehalten werden, damit die Anlage nicht zusätzlich durch Drehmomentüberhöhungen mechanisch belastet wird.

Gleichzeitig sollte weiterhin soviel Leistung wie möglich zur ,Verfügung gestellt werden.

Diese 3 Forderungen können alle realisiert werden, wenn zur Verringerung der Ständerflußaufbaugeschwindigkeit (Δψₛ) der magnetische Ständerfluß (ψₛ) kurzzeitig reduziert oder angehalten wird, damit der Rotorfluß die Möglichkeit hat, dem schnellen Ständerflußanstieg zu folgen. Dies kann dadurch bewirkt werden, daß zwischenzeitlich alle 3 Stränge des Wechselrichters (1) auf ein reduziertes oder auf das gleiche Potential gelegt werden, die Drehfeldmaschine (2) also zwischen ihren Klemmen nur eine reduzierte Spannung (bei einem Mehrpunktwechselrichter) oder keine Spannung mehr anliegen hat. Nachfolgend wird der Einfachheit halber nur die Nullspannungsschaltung näher beschrieben. Durch die "Nullspannungsschaltung" wird der Ständerflußaufbau angehalten, und der Rotorfluß kann dem Ständerflußaufbau folgen. In diesem Fall ergeben sich auch automatisch kleinere Phasenströme (i_{R}, i_{S}, i_{T}), da der Rotor durch diese kurzzeitige Maßnahme nicht mehr "wegkippt". Das Drehmoment (M), das beim Kippen des Rotors außer Kontrolle geraten würde, wird durch die Schaltung der Nullspannung ebenfalls in einem geringen Toleranzband gehalten, wodurch auch die Drehmomentübersteuerungen nicht mehr auftreten. Außerdem steht in diesem Betriebsfall weiterhin möglichst viel Leistung zur Verfügung, und es ergeben sich auch keine Wartezeiten, falls z. B. bei Traktionsfahrzeugen eine Notbremsung eingeleitet werden muß.

Durch die UND-Verknüpfung der beiden Ausgangssignale der Komparatoren (8) und (11) wird der Schaltkontakt des Öffners (4) geöffnet und damit vorzugsweise die "Nullspannung" an den Klemmen der Drehfeldmaschine (2) hergestellt. Dabei ist die Zeitdauer, in welcher eine Nullspannung geschaltet wird, einstellbar im Bereich von 150 µs - 500 ms; sie entspricht etwa der Ausschaltdauer der im Wechselrichter (1) verwendeten GTO-Thyristoren. Die Reglerstellgröße (S3) wird während dieser Zeitdauer nicht beachtet. Dabei muß im Wechselrichter (1) jeweils diejenige Nullspannung geschaltet werden, bei der am wenigsten Ventile geschaltet werden müssen, um die maximale Taktfrequenz klein zu halten. Dies ist in dem Zündimpulswandler (5) mit realisiert.

Um zu verhindern, daß der Eingriff in die normale Regelung zu häufig erfolgt und somit die Regelung nicht mehr richtig arbeiten kann, wird bei Beginn einer Nullspannungsschaltung die Filterung der Speisegleichspannung (U_{d}) neu bei dem aktuellen ungefilterten Wert begonnen. Dadurch erfolgt ein erneuter Eingriff erst dann, wenn sich wieder eine Abweichung ergibt, die größer als die vorgegebene Schwelle (ΔUᵣ) ist und gleichzeitig der Flußanstieg (ψₓ) immer noch oder wieder zu groß ist.

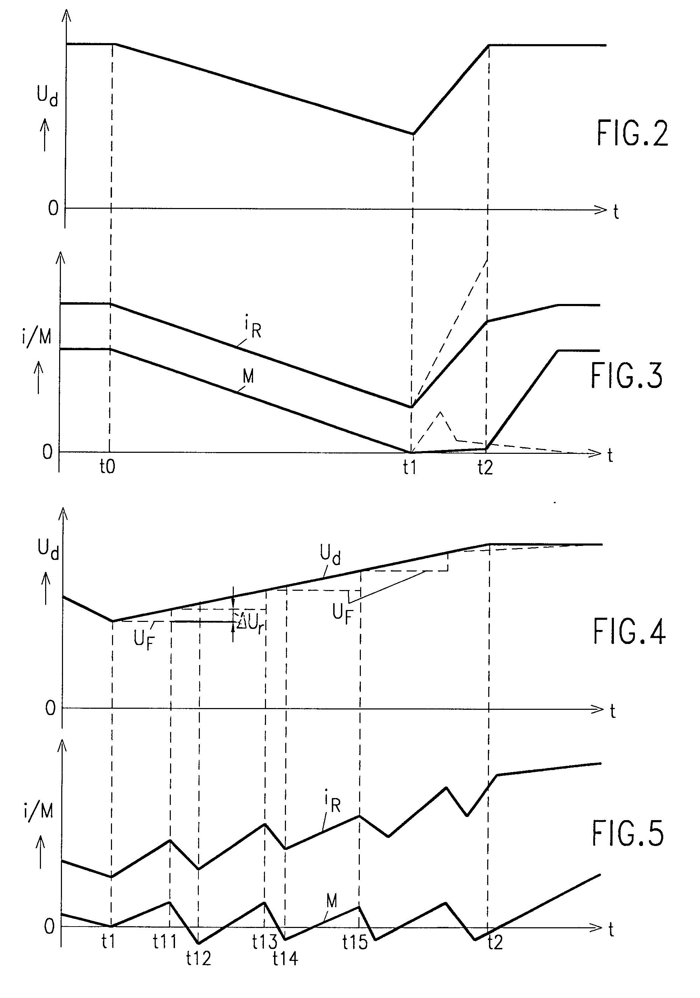

Die Wirkung der erfindungsgemäßen Maßnahme wird anhand der Fig. 2 - 5 erläutert.

Fig. 2, in der auf der Ordinate die Speisegleichspannung (U_{d}) und auf der Abszisse die Zeit (t) aufgetragen sind, zeigt eine grobe Übersicht eines Einbruchs der Speisegleichspannung (U_{d}) in einem Gleichspannungszwischenkreis. Zu einem Zeitpunkt (t0) erfolgt eine Unterbrechung der Einspeisung, wodurch die Speisegleichspannung (U_{d}) nur noch durch die im Kondensator (C) enthaltene Energie gehalten wird und durch die weitere Belastung zu sinken beginnt. Zu einem Zeitpunkt (t1) ist die Einspeisung wieder aktiv, und die Speisegleichspannung (U_{d}) steigt steil an, da es sich fast um eine ungedämpfte Aufladung des Kondensators (C) handelt. Zu einem Zeitpunkt (t2) hat die Speisegleichspannung (U_{d}) wieder ihren Nennwert erreicht, und der normale Betrieb kann fortgesetzt werden. Überschwingungen der Speisegleichspannung (U_{d}) und stets vorhandene Oberschwingungen werden bei dieser Betrachtung vernachlässigt. Durch die Regelung wird während der Zeit von (t0) bis (t1) in Abhängigkeit von der Speisegleichspannung (U_{d}) die Leistungsaufnahme reduziert.

Fig. 3, in der auf der Ordinate ein Strom (i) sowie das Drehmoment (M) der Drehfeldmaschine (2) aufgetragen sind, zeigt den zeitlichen Verlauf des Effektivwertes eines Phasenstromes (i_{R}) und des Drehmomentes (M) der Drehfeldmaschine (2), entsprechend dem Verlauf der in Fig. 2 dargestellten Speisegleichspannung (U_{d}). Dabei würde sich ohne die erfindungsgemäße Schutzmaßnahme der gestrichelt angedeutete Verlauf nach dem Zeitpunkt (t1) einstellen und zum Kippen der Drehfeldmaschine (2) führen, da der Aufbau des magnetischen Ständerflusses (ψₛ) schneller als mit der Rotorzeitkonstante erfolgen würde. Mit der erfindungsgemäßen Maßnahme kann der Stromanstieg unter Kontrolle gehalten werden, da der magnetische Ständerfluß (ψₛ) geregelt aufgebaut wird. Außerdem wird das Drehmoment (M) klein gehalten, bis mit dem erforderlichen magnetischen Ständerfluß (ψₛ) direkt wieder das geforderte Drehmoment (M) eingestellt werden kann, vgl. die ausgezogen dargestellten Kurven.

In den Fig. 4 und 5, die den Fig. 2 und 3 entsprechen, ist der Zeitbereich vom Zeitpunkt (t1) bis zum Zeitpunkt (t2) gedehnt dargestellt, um die Wirkungsweise der Erfindung zu verdeutlichen.

Durch den langsamen Abfall der Speisegleichspannung (U_{d}) vom Zeitpunkt (t0) bis zum Zeitpunkt (t1) ergab sich keine Abweichung zwischen der gefilterten Spannung (U_{F}) und der ungefilterten Speisegleichspannung (U_{d}). Bei dem steilen Spannungsanstieg im Zeitpunkt (t1) ergibt sich durch die Zeitkonstante der Filterung im Tiefpaßfilter (10) eine Totzeit. Zu einem Zeitpunkt (t11) ist die Differenz der gestrichelt dargestellten gefilterten Spannung (U_{F}) zur aktuellen Speisegleichspannung (U_{d}) größer als der eingestellte Komparatorschwellwert (ΔUᵣ). Da durch den steilen Spannungsanstieg der Drehmomentregler (3) von einer nicht dargestellten Flußsteuerung, die parallel zum Drehmomentregler (3) den magnetischen Fluß der Drehfeldmaschine (2) steuert, einen zu steilen Flußanstieg fordert, sind beide Schutzmaßnahmekriterien erfüllt, so daß eine Nullspannungsschaltung ausgelöst wird. Der Wert der gefilterten Spannung (U_{F}) wird auf den Wert der aktuellen Speisegleichspannung (U_{d}) gesetzt, und die Filterung beginnt neu mit diesem aktuellen Wert. Durch die Schaltung der Nullspannung wird der Strom- und Momentenanstieg verhindert. Zu einem Zeitpunkt (t12) wird wieder der Flußaufbau zugelassen bis zu einem Zeitpunkt (t13). Dieser Vorgang wiederholt sich mit einer Nullspannungsschaltung zwischen dem Zeitpunkt (t13) und einem Zeitpunkt (t14) sowie mit einem nachfolgenden Aufbau des magnetischen Ständerflusses (ψₛ) bis zu einem Zeitpunkt (t15) usw. Durch dieses Verhalten wird das Drehmoment (M) bei 0 gehalten, und der Stromanstieg geschieht nur durch den Flußaufbau, der durch die Nullspannungsschaltungen reduziert wird. Sobald der magnetische Ständerfluß (ψₛ) den erforderlichen Wert erreicht hat, kann das Drehmoment (M) nachgefahren werden. Danach kann der Normalbetrieb fortgesetzt werden.

Die Anzahl der Schutzeingriffe hängt von der Dauer des Spannungsanstiegs, der eingestellten Filterzeitkonstanten und der zulässigen magnetischen Flußänderung (Δψₛ) ab. Es kann zwar in dem Zeitbereich vom Zeitpunkt (t1) bis (t2) nur geringfügig Drehmoment (M) übertragen werden, aber danach kann der Betrieb ohne Unterbrechung fortgesetzt werden, während die Anlage ohne diesen Eingriff gekippt wäre und dann komplett neu hochgefahren werden müßte.

### BEZEICHNUNGSLISTE

- 1: Wechselrichter
- 2: Drehfeldmaschine, Asynchronmaschine
- 3: Drehmomentregler
- 4: Öffner
- 5: Zündimpulswandler
- 6: Funktionsgeber
- 7: Differenzierglied
- 8, 11: 1. bzw. 2. Komparatoren
- 9: UND-Glied
- 10: Tiefpaßfilter

- C: Kondensator, Zwischenkreiskondensator
- fₑ: Eckfrequenz, Grenzfrequenz
- i: Strom
- i_{R}, i_{S}, i_{T}: Phasenströme
- N: negativer Pol
- M: Drehmoment von 2
- Mᵣ: Drehmomentsollwert
- Mₓ: Drehmomentistwert
- P: positiver Pol
- R, S, T: Wechselstromphasen
- S3: Reglerstellgröße
- S_{R}, S_{S}, S_{T}: Wechselrichtersteuersignale
- t: Zeit
- t0 - t15: Zeitpunkte
- U: Spannung
- U_{d}: Speisegleichspannung
- U_{F}: Filterausgangsspannung, gefiltertes Spannungssignal
- ΔU: Spannungsdifferenz
- ΔUᵣ: Spannungsdifferenzgrenzwert
- ψₛ: magnetischer Ständerfluß
- Δψₛ: magnetische Flußänderung
- Δψₛᵣ: Grenzwert der magnetischen Flußänderung

## Patentansprüche

1. Verfahren zur Regelung einer Drehfeldmaschine (2),
a) die durch mindestens einen Wechselrichter (1) aus einer Speisegleichspannung (U_{d}) versorgt wird,
b) wobei ein magnetischer Ständerfluss (ψₛ) der Drehfeldmaschine (2) über diesen Wechselrichter (1) einstellbar ist,
dadurch gekennzeichnet,
c) dass die durch eine Änderung der Speisegleichspannung (U_{d}) hervorgerufene magnetische Flussänderung (Δψₛ) des Ständers der Drehfeldmaschine (2) reduziert wird, wenn diese Flussänderung (Δψₛ) einen ersten Grenzwert (Δψₛᵣ) überschreitet.

2. Verfahren nach Anspruch 1, dadurch gekennzeichnet, daß die magnetische Flußänderung (Δψₛ) des Ständers der Drehfeldmaschine (2) nur dann reduziert wird, wenn zusätzlich die Änderung (ΔU) der Speisegleichspannung (U_{d}) einen zweiten Grenzwert (ΔUᵣ) überschreitet.

3. Verfahren nach Anspruch 2, dadurch gekennzeichnet,
a) daß die Speisegleichspannung (U_{d}) verzögert wird,
b) daß die Amplitude dieser verzögerten Spannung (U_{F}) mit der Amplitude der unverzögerten Speisegleichspannung (U_{d}) verglichen wird und
c) daß die Differenz von verzögerter und unverzögerter Speisegleichspannung (U_{d}) als Maß für die Änderung (ΔU) der Speisegleichspannung (U_{d}) verwendet wird.

4. Verfahren nach Anspruch 3, dadurch gekennzeichnet, daß die Verzögerung eine Tiefpaßfilterung ist.

5. Verfahren nach einem der Ansprüche 3 oder 4, dadurch gekennzeichnet, daß bei der Verzögerung der Speisegleichspannung (U_{d}) mit derem aktuellem unverzögertem Wert begonnen wird, wenn die Flußreduzierung aktiviert wurde.

6. Verfahren nach einem der vorhergehenden Ansprüche, dadurch gekennzeichnet, daß zur Reduzierung der magnetischen Flußänderung (ΔΨₛ) des Ständers der Drehfeldmaschine (2) während einer vorgebbaren Zeitdauer deren Stromklemmen auf ein reduziertes Potential gebracht werden.

7. Verfahren nach einem der Ansprüche 1 bis 5, dadurch gekennzeichnet, daß zur Reduzierung der magnetischen Flußänderung (Δψₛ) des Ständers der Drehfeldmaschine (2) während einer vorgebbaren Zeitdauer deren Stromklemmen auf gleiches Potential gebracht werden.

8. Verfahren nach Anspruch 6 oder 7, dadurch gekennzeichnet, daß die vorgebbare Zeitdauer im Bereich von 150 µs - 500 ms liegt.

## Claims

1. Method for controlling an induction machine (2),
a) which is supplied by means of at least one inverter (1) from a DC supply voltage (U_{d}),
b) in which a magnetic stator flux (ψₛ) for the induction machine (2) can be adjusted via this inverter (1),
characterized
c) in that the magnetic flux change (Δψₛ) caused by a change in the DC supply voltage (U_{d}) in the stator of the induction machine (2) is reduced if this flux change (Δψₛ) exceeds a first limit value (Δψₛᵣ).

2. Method according to Claim 1, characterized in that the magnetic flux change (Δψₛ) in the stator of the induction machine (2) is reduced only if, in addition, the change (ΔU) in the DC supply voltage (U_{d}) exceeds a second limit value (ΔUᵣ).

3. Method according to Claim 2, characterized
a) in that the DC supply voltage (U_{d}) is delayed,
b) in that the amplitude of this delayed voltage (U_{F}) is compared with the amplitude of the undelayed DC supply voltage (U_{d}), and
c) in that the difference between the delayed and the undelayed DC supply voltage (U_{d}) is used as a measure of the change (ΔU) in the DC supply voltage (U_{d}).

4. Method according to Claim 3, characterized in that the delay is low-pass filtering.

5. Method according to one of Claims 3 or 4, characterized in that the delay to the DC supply voltage (Ud) is started with its present undelayed value when the flux reduction has been activated.

6. Method according to one of the preceding claims, characterized in that, in order to reduce the magnetic flux change (Δψₛ) in the stator of the induction machine (2) for a time period which can be predetermined, its power terminals are changed to a reduced potential.

7. Method according to one of Claims 1 to 5, characterized in that, in order to reduce the magnetic flux change (Δψₛ) in the stator of the induction machine (2) for a time period which can be predetermined, its power terminals are changed to the same potential.

8. Method according to Claim 6 or 7, characterized in that the time period which can be predetermined is in the range from 150 µs to 500 ms.

## Revendications

1. Procédé de régulation d'un générateur à induction (2)
a) qui est alimenté à partir d'une tension continue d'alimentation (U_{d}) au travers d'au moins un onduleur (1),
b) un flux magnétique de stator (ψₛ) du générateur à induction (2) étant réglable par le biais de cet onduleur (1),
caractérisé en ce que
c) la variation du flux magnétique (Δψₛ) du stator du générateur à induction (2) provoquée par une variation de la tension continue d'alimentation (U_{d}) est réduite lorsque cette variation du flux (Δψₛ) dépasse une première valeur limite (Δψₛᵣ).

2. Procédé selon la revendication 1, caractérisé en ce que la variation du flux magnétique (Δψₛ) du stator du générateur à induction (2) n'est réduite que si la variation (ΔU) de la tension continue d'alimentation (U_{d}) dépasse en plus une deuxième valeur limite (ΔUᵣ).

3. Procédé selon la revendication 2, caractérisé en ce que
a) la tension continue d'alimentation (U_{d}) est temporisée,
b) l'amplitude de cette tension temporisée (U_{F}) est comparée avec l'amplitude de la tension continue d'alimentation non temporisée (U_{d}), et
c) la différence entre la tension continue d'alimentation temporisée et non temporisée (U_{d}) est utilisée comme mesure pour la variation (ΔU) de la tension continue d'alimentation (U_{d}).

4. Procédé selon la revendication 3, caractérisé en ce que la temporisation est provoquée par un filtrage passe-bas.

5. Procédé selon l'une des revendications 3 ou 4, caractérisé en ce que la temporisation de la tension continue d'alimentation (U_{d}) commence par la valeur courante non temporisée lorsque la réduction du flux a été activée.

6. Procédé selon l'une des revendications précédentes, caractérisé en ce que pour réduire la variation du flux magnétique (Δψₛ) du stator du générateur à induction (2), ses bornes d'alimentation sont amenées à un potentiel réduit pendant une durée prédéterminée.

7. Procédé selon l'une des revendications 1 à 5, caractérisé en ce que pour réduire la variation du flux magnétique (Δψₛ) du stator du générateur à induction (2), ses bornes d'alimentation sont amenées au même potentiel pendant une durée prédéterminée.

8. Procédé selon l'une des revendications 6 ou 7, caractérisé en ce que la durée prédéterminée est comprise entre 150 µs et 500 ms.
